# EUROPEAN PATENT APPLICATION

(11) **EP 1 501 033 A2**
(43) Date of publication of application: **26.01.2005**
(21) Application number: 04102674.1
(22) Date of filing: 14.06.2004
(51) Int. Cl.: G06F 17/60, H04L 12/18, H04L 29/06

(54) **Interactive environment**

(30) Priority: 13.06.2003 IT TO20030445
(71) Applicant: Rovera Alessandro, 10128 TORINO (IT)
(72) Inventor: Rovera, Alessandro, 10128 Torino (IT); Pintore, Massimo, 10143 Torino (IT)
(74) Representative: Jorio, Paolo

(57) **Abstract**

The interactive environment according to the invention is a physical environment in continual interactive change with respect to in-house customers: customers entering the environment determine an automatic change in the characteristics of the environment, in terms of visual and audio features, and psycho-physical sensations in general. Changes can be made to lighting, colour schemes, and the content of in-house multimedia audio and video transmissions: atmosphere, topics, celebrities, personal message displays and announcements. To do this, the interactive environment automatically identifies in-house customers, and accordingly adapts its physical characteristics automatically to their profiles, preferences, personal characteristics, and personal data. The mix of characteristics and preferences of large numbers of in-house customers determines the setup and look of the environment as a whole.

## Description

The present invention relates to an interactive environment.

As is known, entertainment businesses such as bars and discotheques have interiors specially designed to attract, or reflect the tendencies and taste of, a given type of clientele.

With time, however, the novelty invariably wears off, so that businesses of this sort are subject to frequent renovation.

Moreover, the interior design of businesses of this sort inevitably brings about a process of natural selection among potential customers, by only attracting those who identify with the environment.

It is an object of the present invention to provide an interactive environment designed to at least partly eliminate the aforementioned drawbacks.

According to the present invention, there is provided an interactive environment, as claimed in Claim 1.

A preferred, non-limiting embodiment of the present invention will be described by way of example with reference to the accompanying drawings, in which:
Figure 1 shows, schematically, an interactive environment in accordance with the present invention;
Figure 2 shows an operating diagram of a module implementing the automatic environment-customer interaction function.

The basic idea of the present invention is to provide a physical environment in continual interactive change with respect to in-house customers. Customers entering the environment determine an automatic change in the characteristics of the environment, in terms of visual and audio features, and psycho-physical sensations in general.

Changes can be made to lighting, colour schemes, and the content of in-house multimedia audio and video transmissions: atmosphere, topics, celebrities, personal message displays and announcements.

To do this, the interactive environment automatically identifies in-house customers, and accordingly adapts its physical characteristics automatically to their profiles, preferences, personal characteristics, and personal data. The mix of characteristics and preferences of large numbers of in-house customers determines the setup and look of the environment as a whole.

In-house customers are automatically identified using present and future communication technology: GSM mobile telephones; GPRS telephones; UMTS systems; cable and wireless WEB, WAP networks; radio-frequency identification (RFID); and any other suitable means of transmitting and receiving digital data.

Customers entering the environment can be identified in three ways:
- customers entering the environment log on at a terminal at the entrance to the environment;
- customers entering the environment log onto the environment's computer system by SMS message over a cellular telephone; and the system sends back an SMS confirm-pass message once the customer is identified;
- customers already logged in the environment are issued a radio-frequency identification tag by which they are automatically identified at the entrance to the environment.

At present, customers are identified by the environment's computer system by mobile GSM communication or RFID systems, but in future identification may be based on the same principle, but using more advanced mobile communication systems, such as GPRS and UMTS.

According to another aspect of the invention, the interactive environment runs a database in which each logged customer is assigned a personal data and preference record, which is gradually updated by the customer and the environment computer system.

The database comprises four main records:
- personal data
- interests and preferences
- personal multimedia material (audio and/or video documents, texts, photographs, etc.)
- chronological interaction history, score, rank, etc.

The personal data record may be divided, for example, into the following fields: username/nickname, password, name and surname, status (M/F/single, married, etc.), date and place of birth, address (street, number, town), telephone numbers (home, cellular), e-mail address, profession.

The interest and preference record is top-down organized, i.e. from general to specific, and may be divided, for example, into the following subrecords: hobbies, music, cinema, reading, sport, fashion, current affairs, fitness, travel, etc.; and each subrecord may in turn be divided, for example, into the following fields:
- general preference field: fashion
- specific preference field: fashion.items = shoes
- specific preference field: fashion.items.type = shoes.gucci
- specific preference field: fashion.events = Paris winter 2004
- specific preference field: fashion.person = Versace
- specific preference field: fashion.location = Milan
- general preference field: sport
- specific preference field: sport.type = football
- specific preference field: sport.type.team = football.juventus
- specific preference field: sport.type.person = football.delpiero
- general preference field: music
- specific preference field: music.type = heavy metal
- specific preference field: music.type.person = AC-DC
- specific preference field: music.type.events = Live in London 1990
- general preference field: current affairs
- specific preference field: current affairs.topic #1 = city news
- specific preference field: current affairs.topic #2 = gossip news
- general preference field: hobby = history of art
- specific preference field: hobby.location = L'Ouvre Paris
- specific preference field: hobby.specific = painting
- specific preference field: hobby.person = Vittorio Sgarbi
- specific preference field: hobby.events = contemporary painting exhibition Tokyo 2001

The number of database fields varies alongside changes in customers' tastes and habits.

The interactive environment transmits a sequence of multimedia material over various broadcasting channels, selecting it automatically from a database of edited multimedia material.

For each multimedia document, the multimedia material database is organized into three main records:
- data identifying each multimedia document: author's name, code, duration, document data (name, file type and size, entry data, editing reference, description of content, etc.);
- interests and preferences covered by each multimedia document; and
- chronological transmission history of the multimedia document.

Each multimedia document is then classified according to the topics it contains.

Multimedia documents entered into the database may, for example, be: a filmed recording of a sporting event; a fashion show video; Internet American TV news coverage of a rock group concert; a video of the last CD of a musician, etc.

Once the customer is identified, the interactive environment can thus transmit multimedia documents dealing with the customer's favourite topics.

In the presence of a number of customers, the interactive environment builds a given number of multimedia document sequences, on the basis of the preference mix of current in-house customers, by means of a dedicated software module or so-called Multimedia Mixer, which real-time adapts the multimedia document sequences according to the customers entering and leaving the environment, which is thus in continual interactive change with respect to in-house customers.

More specifically, the Multimedia Mixer controls a series of digital audio/video output devices (video screens, speakers, lights, etc.) over a wireless or fibre-optic local digital network to real-time modify and adapt the characteristics of each of its interactive areas to the customers in the Multimedia Mixer.

Once the customer entering the environment is identified, the Multimedia Mixer screens the customer's nickname and the personal multimedia material selected by the customer by way of personal identification; and, as explained in detail later on, the customer's membership standing and score within the environment : a sort of anonymous multimedia identity card characterizing each customer.

The interactive environment gradually acquires customers' characteristics, profiles, and preferences on the basis of the way in which customers interact with the various elements of the environment.

More specifically, the degree and extent to which customers interact with the various elements of the environment determine the extent to which the system is capable of identifying them.

The greater the degree of interaction, the number of contacts, and the time spent "living" the environment, the more accurately the environment is able to identify customers, adapt to customers' personal characteristics, and cater to customers' preferences and what is expected of a "personalized environment".

Interaction is intended to mean activity both within the environment and outside by Internet and cellular telephone.

With each interaction, customers gain experience, acquire standing within the environment, and eventually acquire such a highly defined profile as to become an authority visitor fully recognizable by the environment.

More specifically, interaction with the environment is intended to mean:
- frequenting the environment and making use of the entertainment and restaurant facilities provided;
- using the in-house local network to browse the Internet, chat, make purchases, play on-line, transmit messages, and define one's personal preference profile;
- using the in-house web portal to browse the Internet, chat, make purchases, play on-line, transmit messages, define one's personal preference profile, and remote monitor the environment, e.g. from home;
- communicating with other customers and transmitting/receiving information to/from the environment by cellular telephone.

Each interaction is logged by the system, which automatically updates the databases, so that:
- the greater the interaction between the customer and the environment, the higher the customer's score is, the more accurately the customer's profile is defined, and the greater the accuracy with which the Multimedia Mixer selects and transmits the customer's favourite multimedia documents;
- the greater the interaction between the customer and the environment, the higher the customer's score and standing, i.e. membership level, is with respect to other customers in the Multimedia Mixer.

Alternative membership level criteria may be, for example: the order in which customers arrive; expenditure per unit of time (day, month, year, etc.); the type of products or services purchased; the length of time spent within the environment; the type of activity performed within the environment; the degree of participation in in-house events; the number of contacts made with other customers; the number of new customers introduced; and the degree of personal contribution.

Besides being an actual place, i.e. a physically existing area, the interactive environment is also a network which goes beyond physical boundaries, and which links members, even when physically remote from the actual environment, over communications channels, such as: GSM mobile telephones, GPRS telephones, UMTS systems, cable and wireless WEB, WAP networks, and any other means of transmitting and receiving digital data.

By means of a multimode platform, everything taking place inside the environment is transmitted outside the environment through the local network (LAN), and outside customers can be connect to the environment through the Internet and cellular telephones.

Besides knowing and identifying the characteristics of customers frequenting the environment, the interactive environment is also able to predict and cater to customers' information requirements concerning their favourite topics, not only when customers are actually within the environment, but also, and above all, when they are elsewhere but connected to the environment over the Internet.

Even personal buying can be catered to within the interactive environment. The system in fact is able to handle the purchasing requirements of known customers, both in-house and connected externally over the Internet, and, once the purchase is specified, to assist customers in evaluating and selecting goods or services, and to connect or direct them to given retail outlets.

On the basis of the preference profile, the interactive environment is able to provide customers, both in-house and connected externally over the network, with information about the commercial products of interest.

All the products proposed are organized in a dedicated so-called Custom Promotion database, which is organized in four main records:
- product identification data: name, code, price, etc.;
- multimedia product presentation (audio, pictures, video, demo);
- interests and preferences covered by the product (product profile);
- chronological promotion history of the product or service.

Each product is classified according to its characteristics, and products for given customers are selected by a dedicated product-customer matching software module.

The interactive environment is dynamic with respect to customer development: by means of the same data acquisition, identification, and automatic environment adaptation system, the environment is able to track changes in customers' profiles, preferences, and tastes, thus growing and changing with them.

The interactive environment is also dynamic with respect to developments in technology: customer identification and real-time environment adaptation are performed using the latest recognition and communication technology as it becomes available.

Besides knowing customers on the basis of gradually acquired customer-specified profiles, the interactive environment is also able to characterize and identify customers by gathering information relative to tastes, habits, and preferences, simply on the basis of the way in which customers interact and behave within the environment.

The system is dynamic by varying and enriching the above database structures as time goes by, so that the environment also varies according to changes in Multimedia Mixer and Custom Promotion input data.

The customer database evolves by means of various types of data processing:
- by analysing the preferences of customers logged in the database, popular topics can be dealt with in more detail, or unpopular topics eliminated, so as to orient in-house multimedia transmission around specifically targeted topics;
- each interaction by customers is logged in the database, thus enabling analysis of customer behaviour, custom frequency and times, product selection, and response to given promotion campaigns.

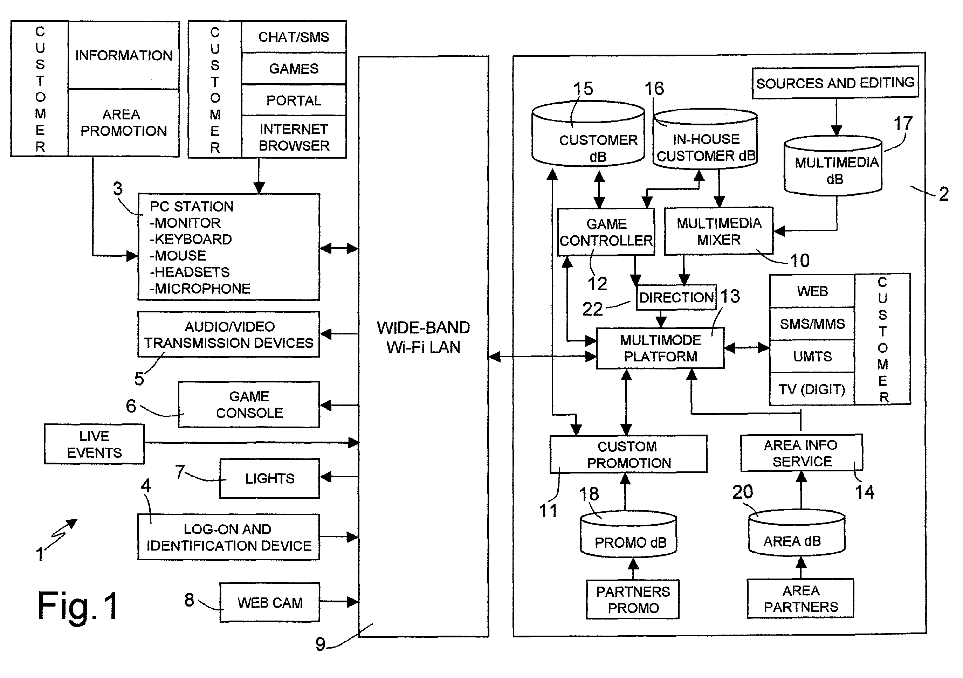

Figure 1 shows an operating block diagram of the interactive environment according to the invention.

As shown in Figure 1, the interactive environment, indicated as a whole by 1, substantially comprises:
- a main computer (server) 2 controlling the whole environment and performing all the functions described above;
- personal computer (client) stations 3 with a video screen, keyboard, mouse, headsets, microphone, and web cameras, where customers can perform all the activities described above (chat, SMS messages, Internet browsing, games, Smart Shelf product purchases, etc.);
- a log-on and identification device 4 of the type described above, preferably located at the entrance to the environment to identify in-coming customers;
- audio/video transmission devices 5 for in-house transmission of multimedia material (music, films, texts, photographs, nicknames, in-coming customer membership levels and scores, custom map, etc.);
- a game console 6:

- a lighting system 7;
- web cameras 8 installed throughout the environment to film customers and in-house live events; and
- a wide-band Wi-Fi (Wireless Fidelity: radio-frequency wireless connection) local network (LAN) 9 over which all the above devices are connected to and controlled by the server.

As shown in Figure 1, server 2 comprises software implementing the various functions described above, and in particular implementing the following software modules:
- a Multimedia Mixer 10 for preparing and real-time adapting multimedia material transmission sequences according to the customers entering and leaving the environment or the various areas of it;
- a Custom Promotion module 11 for assisting and guiding customers, both in-house and connected externally over the Internet, in evaluating, selecting, and purchasing products and/or services;
- a Game Controller 12 for real-time updating customers' scores and membership levels on the basis of customer-environment interaction;
- a Multimode Platform 13 communicating with the above software modules to enable customers to interact with the various applications in various ways, either one at a time or simultaneously, i.e. to access contents and applications using different types of input and obtaining different types of output (WEB, SMS/MMS, UMTS, digital TV).

The software of server 2 may conveniently also implement a so-called Area Info Service software module 14 for supplying customers with local information, and enabling institution and business partners to come into contact with young people to analyse their behaviour and preferences, implement social policies, learn the younger-generation's standpoint on various issues, supply information concerning current activities within the area, etc.

Server 2 stores all the databases mentioned previously, and in particular :
- a database 15 of all the environment's customers, which is used by Game Controller 12 and Custom Promotion module 11;
- a database 16 of in-house customers, which is used by Game Controller 12 and Multimedia Mixer 10;
- a database 17 of available multimedia material, which is used by Multimedia Mixer 10;
- a database 18 of promoted products and/or services, which is used by Custom Promotion module 11; and
- a database 20 of area partners, which is used by Area Info Service module 14.

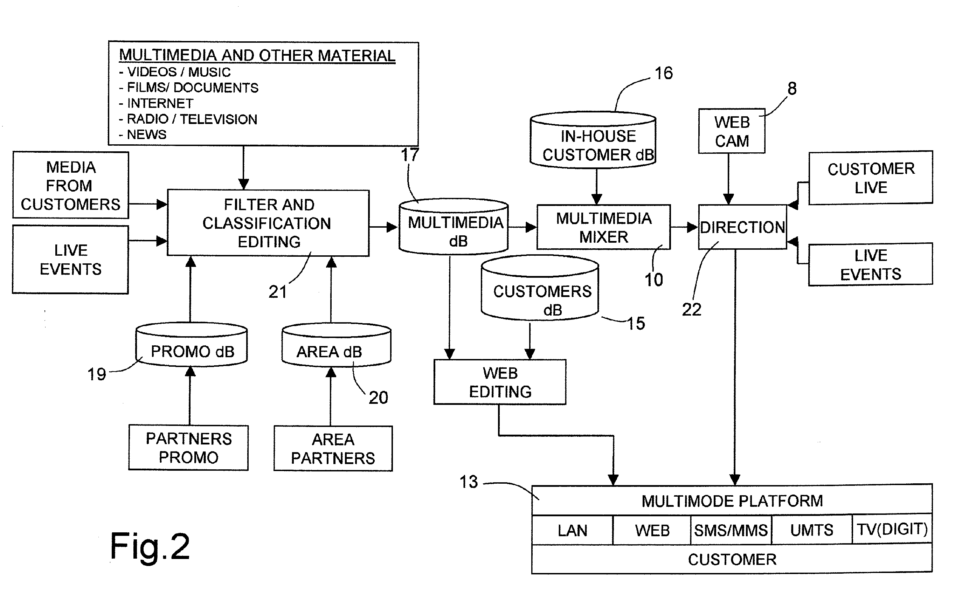

Figure 2 shows an operating block diagram of the Multimedia Mixer.

As shown in Figure 2, multimedia material (videos; music; films; documents; Internet, radio, and television material; live events) - both material supplied by customers and institution and business partners, and material acquired by the environment over conventional channels, including live in-house events - is classified by an editing staff 21, who analyse the material and edit database 17, and is then loaded into multimedia database 17.

Multimedia Mixer 10 therefore draws from both multimedia database 17 and in-house customer database 16, to compile sequences reflecting the preferences of in-house customers on the basis of their profiles and membership levels.

The sequences compiled by Multimedia Mixer 10 are then transmitted to a direction 22 who, also on the basis of images from web cameras 8 installed throughout the environment, transmits the multimedia material by means of multimode platform 13.

Figure 2 also shows a web editing module, which defines an html Internet interface (portal) by which the content of the multimedia and customer databases are transmitted to outside customers.

The advantages of the interactive environment according to the present invention will be clear from the foregoing description.

In particular, the problems facing conventional entertainment businesses - gradual loss of interest by customers, and the fact that such businesses normally only attract customers who identify with the environment - are fully solved by the interactive environment according to the invention, which is an entertainment environment in continual interactive change with respect to in-house customers, by automatically identifying in-house customers, and automatically adapting its physical characteristics on the basis of customers' profiles and preferences.

Clearly, changes may be made to the interactive environment as described and illustrated herein without, however, departing from the scope of the present invention as defined in the accompanying Claims.

For example, the membership level criteria may be other than as described.

## Claims

1. An interactive environment (1), **characterized by** comprising:
- audio/video transmission means (5) for transmitting multimedia material in the environment (1);
- customer identification means (4) for identifying customers within the environment (1);
- customer profile memorizing means (15, 16) for memorizing, for each customer, a customer profile comprising identification data, preferences, and a membership level; and
- control means (2) connected to said customer identification means (4), to said customer profile memorizing means (15), and to said audio/video transmission means (5) to automatically vary the multimedia material transmitted in the environment (1) on the basis of the preferences and membership level of customers present in the environment.

2. An interactive environment as claimed in Claim 1, wherein said customer profile also comprises data relative to personal multimedia material supplied by the customer; and a chronological history of the customer's interactions with the environment.

3. An interactive environment as claimed in Claim 1 or 2 and comprising a lighting system (7), wherein said control means (2) are also connected to said lighting system (7) to automatically control the lighting system of the environment on the basis of the preferences and membership level of customers present in the environment.

4. An interactive environment as claimed in any one of the foregoing Claims, and also comprising updating means (2) for updating said customer profiles on the basis of the way in which customers interact with the environment.

5. An interactive environment as claimed in any one of the foregoing Claims, and also comprising multimedia material memorizing means (17).

6. An interactive environment as claimed in Claim 5, and also comprising sequence compiling means (10) for determining the transmission sequence of multimedia material in the environment on the basis of the preferences and membership level of customers present in the environment.

7. An interactive environment as claimed in Claim 6, wherein said sequence compiling means (10) also adapt the transmission sequence of multimedia material in the environment on the basis of customers entering and leaving the environment.

8. An interactive environment as claimed in any one of the foregoing Claims, and also comprising a number of personal computer stations (3) by which customers can perform a number of entertainment activities and interact with one another.

9. An interactive environment as claimed in Claim 8, and also comprising a local connection network (9) connecting said personal computer stations (3) to one another and to said control means (2).

10. An interactive environment as claimed in any one of the foregoing Claims, and also comprising a multimode platform (13) permitting access by customers to environment contents and applications using different types of input and obtaining different types of output.

11. An interactive environment as claimed in any one of the foregoing Claims, wherein said customer identification means (4) comprise a data loading terminal preferably located at the entrance to the environment.

12. An interactive environment as claimed in any one of Claims 1 to 11, wherein said customer identification means (4) communicate with customers' portable communication terminals.

13. An interactive environment as claimed in any one of the foregoing Claims, and also comprising purchasing help means (11) for assisting customers in evaluating, selecting, and purchasing products.
